# EUROPEAN PATENT SPECIFICATION

(11) **EP 4 538 436 B1**
(45) Date of publication and mention of the grant of the patent: **23.09.2026**
(21) Application number: 23828668.6
(22) Date of filing: 01.03.2023
(51) Int. Cl.: D01F 9/22, D01D 10/02

(54) **PREPARATION METHOD FOR HIGH-PERFORMANCE, LOW-COST CARBON FIBER**
HERSTELLUNGSVERFAHREN FÜR KOSTENGÜNSTIGE HOCHLEISTUNGS-KOHLENSTOFFFASER
PROCÉDÉ DE PRÉPARATION DE FIBRE DE CARBONE À HAUTE PERFORMANCE ET À FAIBLE COÛT

(30) Priority: 28.06.2022 CN 202210741252
(43) Date of publication of application: 16.04.2025
(73) Proprietor: Zhongfu Shenying Carbon Fiber Co., Ltd., Jiangsu 222069 (CN)
(72) Inventor: CHEN, Qiufei, Lianyungang, Jiangsu 222069 (CN); WANG, Chunhua, Lianyungang, Jiangsu 222069 (CN); CHEN, Xiaohan, Lianyungang, Jiangsu 222069 (CN); WANG, Xiaoxu, Lianyungang, Jiangsu 222069 (CN); LIU, Jie, Lianyungang, Jiangsu 222069 (CN)
(74) Representative: Michalski Hüttermann & Partner mbB
(86) International application number: PCT/CN2023/078935
(87) International publication number: WO 2024/001261

(56) References cited:
- CN-A- 104 233 514
- CN-A- 105 401 262
- CN-A- 106 222 803
- CN-A- 109 306 553
- CN-A- 111 560 666
- CN-A- 112 695 412
- CN-A- 114 941 187
- JP-A- 2010 242 249
- US-A1- 2020 248 339

## Description

### Technical Field

The present disclosure relates to, but is not limited to a method for preparing high-performance and low-cost carbon fiber.

### Background

Carbon fiber is a high-temperature resistant fiber with high strength and high modulus. It is widely used in aerospace engineering, military and competitive sports due to its excellent mechanical properties such as high strength, high hardness, light weight, chemical resistance and high temperature resistance. Carbon fiber is mainly composed of carbon atoms with a diameter of about 5-10 um, and is a prominent representative in the field of new materials technology. Due to the long production process of carbon fiber and the diverse and complex items and parameters of various processes, the general cost of producing carbon fiber is relatively high. In addition to the costs of various chemical raw materials, the carbonization process (including pre-oxidation and carbonization processes) in the process of producing carbon fiber accounts for the main part of the cost of producing carbon fiber. Further, the cost of the pre-oxidation process accounts for about 70% of the overall cost of producing carbon fiber. Therefore, the cost control of the pre-oxidation process in the carbonization process is of great significance to controlling the cost of producing carbon fiber.

Generally speaking, the pre-oxidation process of carbon fiber requires 4 to 6 temperature zones with different temperature gradients to air pre-oxidize the fiber. The pre-oxidation time is 60 minutes or more, and the temperature of each temperature zone is in a range of 180 to 300 °C. Where, the low-temperature carbonization process and the high-temperature carbonization process need to be carried out in a high-purity nitrogen atmosphere. The temperature of each temperature zone is in a range of 300 to 1800 °C, and the duration is generally 1 to 10 minutes. Generally, excessive pre-oxidation temperature zones and durations lead to increased costs of producing carbon fiber, including equipment loss, energy consumption, and manpower costs.

Further, it is particularly important to control the process parameters (such as temperature, pulling speed, etc.) of the pre-oxidation process in the process of producing carbon fiber. For example, the hard particles (generally the product of pyrolysis of silicone-containing oil during pre-oxidation) produced by the fiber oil during the pre-oxidation process have an impact on the performance of carbon fiber. If improperly controlled, it will lead to poor stability and large coefficient of variation of the carbon fiber product, resulting in poor finishing and mechanical properties of the carbon fiber. Therefore, reducing the quantity of temperature zones in the pre-oxidation process and reducing the pre-oxidation time have become important research directions to reduce the cost of producing carbon fiber and improve the performance and stability of carbon fiber.

### Summary

The following is the summary of the present disclosure and the preparation process. This summary is not intended to limit the protection scope defined by the claims.

The present disclosure provides a method for preparing high-performance and low-cost carbon fiber.

A first aspect of the present disclosure provides a method for preparing high-performance and low-cost carbon fiber, including:
performing a pre-oxidation process treatment on polyacrylonitrile precursor using 2 to 3 temperature zones, to obtain pre-oxidized fiber, where a temperature of the pre-oxidation process treatment is in a range of 200 to 300 °C, a difference between aromatization indexes of fibers in any two adjacent temperature zones of the temperature zones is equal and in a range of 0.15 to 0.30, a circulating air is applied during the pre-oxidation process treatment at a wind speed of 5 to 10 m/s and using clean air with PM2.5 ≤ 100 µg/m³, a duration of the pre-oxidation process treatment is less than or equal to 40 minutes; and
performing a carbonization process treatment on the pre-oxidized fiber, to obtain the high-performance and low-cost carbon fiber.

Where, an aromatization index of the pre-oxidized fiber is less than or equal to 0.6.

Where, the polyacrylonitrile precursor is prepared by dry spinning, wet spinning, dry-jet wet spinning or electrostatic spinning.

Where, strength of the polyacrylonitrile precursor is ≥ 7.0 cN/dtex, and fineness of the polyacrylonitrile precursor is ≤ 0.75 dtex.

Where, the aromatization index of the fiber in one temperature zone is measured after the fiber staying in the temperature zone and before the fiber entering the next temperature zone. The aromatization index of the fiber is measured by the XRD method.

Where, during the pre-oxidation process treatment, a residence time of the polyacrylonitrile precursor in each temperature zone is the same.

Where, the difference between aromatization indexes of fibers in any two adjacent temperature zones is in a range of 0.17 to 0.25.

Where, the wind speed is in a range of 7 to 8 m/s.

Where, the circulating air is applied using clean air with PM2.5 ≤ 50 µ g/m³.

Where, the duration of the pre-oxidation process treatment is 30 to 40 minutes.

Compared with the prior art, the present disclosure has the following advantages:
(1) In the present disclosure, the difference between the aromatization index of the fiber in each temperature zone and the aromatization index of the fiber in the previous temperature zone is controlled the same, to obtain the pre-oxidized fiber with an final density of 1.33 to 1.36 g/cm³, which improves the uniformity of the pre-oxidation reaction, shortens the duration of the pre-oxidation process treatment, and ensures that the duration of the pre-oxidation process treatment is less than or equal to 40 minutes, and the quantity of the temperature zones is less than or equal to 3, thereby effectively reducing the preparation cost of the carbon fiber.
(2) In the present disclosure, the circulating air is applied during the pre-oxidation process treatment, and the cleanliness of the circulating air is controlled to ensure PM2.5 ≤ 100 µg/m³, which improves the heat exchange rate and reduces the influence of hard particles on the high-speed impact of fiber bundles, thereby reducing broken filaments and improving the continuity and uniformity of the fiber.
(3) In the present disclosure, the performance of the prepared carbon fiber is excellent. The tensile strength is ≥5.6 Gpa. The coefficient of variation of the tensile strength is ≤ 3.9%. The prepared carbon fiber has high added value and is suitable for high-end application fields such as aerospace.

### Detailed Description

The exemplary embodiment of the present disclosure provides a method for preparing high-performance and low-cost carbon fiber, including:
performing a pre-oxidation process treatment on polyacrylonitrile precursor using 2 to 3 temperature zones to obtain pre-oxidized fiber, where a temperature of the pre-oxidation process treatment is in a range of 200 to 300 °C, a difference between aromatization indexes of fibers in any two adjacent temperature zones of the temperature zones is equal and in a range of 0.15 to 0.30, a circulating air is applied during the pre-oxidation process treatment at a wind speed of 5 to 10 m/s and using clean air with PM2.5 ≤ 100 µg/m³, a duration of the pre-oxidation process treatment is less than or equal to 40 minutes; and
performing a carbonization process treatment on the pre-oxidized fiber to obtain the high-performance and low-cost carbon fiber.

The polyacrylonitrile precursor may be prepared by dry spinning, wet spinning, dry-jet wet spinning or electrostatic spinning, or the polyacrylonitrile precursor may be obtained through purchase.

The strength of the polyacrylonitrile precursor is ≥ 7.0 cN/dtex, and the fineness of the polyacrylonitrile precursor is ≤ 0.75 dtex. For example, the strength of the polyacrylonitrile precursor may be 7.0 cN/dtex, 7.5 cN/dtex, 8.0 cN/dtex, 9.0 cN/dtex or greater; the fineness of the polyacrylonitrile precursor may be 0.75 dtex, 0.7 dtex, 0.65 dtex, 0.5 dtex or less. The polyacrylonitrile precursor with a strength of equal to or greater than 7.0 cN/dtex and a fineness of equal to or less than 0.75 dtex is used to prepare carbon fiber, the performance of the polyacrylonitrile precursor is more stable and the properties of the polyacrylonitrile precursor are more uniform after the polyacrylonitrile precursor is pre-oxidized, and the pre-oxidation process can be shortened, thereby reducing the production cost of preparing carbon fiber.

In this embodiment, the polyacrylonitrile precursor may be provided in the form of a coil. The coil of the polyacrylonitrile precursor is placed on a reeling mechanism, so that the polyacrylonitrile precursor can be continuously provided through the reeling mechanism, so as to facilitate the subsequent pulling of the polyacrylonitrile precursor to pass through the plurality of temperature zones for the pre-oxidation process treatment.

Pull the polyacrylonitrile precursor to pass through 2 to 3 temperature zones in sequence, to perform the pre-oxidation process treatment on the polyacrylonitrile precursor. The aromatization index of the polyacrylonitrile precursor increases by an increasing magnitude after the polyacrylonitrile precursor is passed through each temperature zone and pre-oxidized. The aromatization index of the polyacrylonitrile precursor increases with an equal magnitude when the polyacrylonitrile precursor is passed through adjacent temperature zones.

The increasing magnitude of the aromatization index of the polyacrylonitrile precursor is 0.15 to 0.30 when the polyacrylonitrile precursor is passed through each temperature zone. In some embodiments, the increasing magnitude of the aromatization index of the polyacrylonitrile precursor is 0.17 to 0.25 when the polyacrylonitrile precursor is passed through each temperature zone. For example, the increasing magnitude of the aromatization index of the polyacrylonitrile precursor is 0.17, 0.18, 0.19, 0.20, 0.21, 0.22, 0.23, 0.24 or 0.25 when the polyacrylonitrile precursor is passed through each temperature zone.

In this embodiment, an aromatization index of the pre-oxidized fiber obtained by passing the polyacrylonitrile precursor through each temperature zone to perform a pre-oxidation process treatment on the polyacrylonitrile precursor is 0.6 or less.

In some embodiments, the temperature of each temperature zone is in a range of 200 to 300 °C. For example, the temperature of each temperature zone is 200 °C, 220 °C, 240 °C, 250 °C, 270 °C, 290 °C or 300 °C.

When the pre-oxidation process treatment is performed on the polyacrylonitrile precursor in each temperature zone, a circulating air is applied to the polyacrylonitrile precursor at a wind speed of 5 to 10 m/s, and the circulating air is air with PM2.5 ≤ 100 µg/m³. In this embodiment, the circulating air is applied to the polyacrylonitrile precursor during the pre-oxidation process to improve the heat exchange rate of the polyacrylonitrile precursor. At the same time, the circulating air is air with PM2.5 ≤ 100 µg/m³ to prevent the hard particles in the air from colliding with the polyacrylonitrile precursor and damaging the polyacrylonitrile precursor, thereby reducing the quantity of hairy defects on the surface of the polyacrylonitrile precursor, ensuring that the formed carbon fiber has good performance stability, continuity and uniformity, which is beneficial to improving the yield and output of carbon fiber. In some embodiments, the circulating air is applied to the polyacrylonitrile precursor during the pre-oxidation process at a wind speed of 7 to 8 m/s, and the circulating air is air with PM2.5 ≤ 50 µ g/m³.

In this embodiment, a duration of the pre-oxidation process treatment performed on the polyacrylonitrile precursor in each temperature zone is the same. A duration of the pre-oxidation process treatment performed on the polyacrylonitrile precursor during the polyacrylonitrile precursor being passed through 2 to 3 temperature zones is 40 minutes or less. In some embodiments, the duration of the pre-oxidation process treatment performed on the polyacrylonitrile precursor during the polyacrylonitrile precursor being passed through 2 to 3 temperature zones is 30 to 40 minutes.

Exemplary, the number of the temperature zones is set to 3, and the polyacrylonitrile precursor is passed through the 3 temperature zones in sequence to perform the pre-oxidation process treatment on the polyacrylonitrile precursor. The duration of the pre-oxidation process treatment performed on the polyacrylonitrile precursor in each temperature zone is the same. The aromatization index of the polyacrylonitrile precursor increases by 0.17 to 0.25 after the polyacrylonitrile precursor is passed through each temperature zone. In this example, the aromatization index of the polyacrylonitrile precursor increases by 0.2 after the polyacrylonitrile precursor is passed through each temperature zone. The aromatization index of the pre-oxidized fiber obtained after performing the pre-oxidation process treatment in 3 temperature zones is 0.60.

In this embodiment, by controlling the process conditions of the pre-oxidation process treatment on the polyacrylonitrile precursor in each temperature zone, the increasing index of the aromatization index of the polyacrylonitrile precursor after the polyacrylonitrile precursor is passed through each temperature zone is the same. The density of the pre-oxidized fiber obtained in the pre-oxidation process in S2 is 1.33 to 1.36 g/cm³, which improves the uniformity of the pre-oxidation reaction, shortens the duration of the pre-oxidation process, and effectively reduces the preparation cost of the carbon fiber. At the same time, in this embodiment, the number of temperature zones for the pre-oxidation process treatment is 2 to 3, which reduces the equipment loss, energy consumption, manpower and other costs in the pre-oxidation process.

The following implementation may be used to perform the carbonization process treatment on the pre-oxidized fiber.

Pull the pre-oxidized fiber to pass through 5 low-temperature carbonization zones in sequence. The temperature of low-temperature carbonization in each low-temperature carbonization zone is in a range of 400 to 800 °C, for example, may be 400 °C, 500 °C, 600 °C, 700 °C or 800 °C. The duration of low-temperature carbonization process performed on the pre-oxidized fiber in each low-temperature carbonization zone is 2 to 3 minutes, for example, may be 2 minutes, 2.5 minutes, or 3 minutes. Then, pull the pre-oxidized fiber to pass through 5 high-temperature carbonization zones in sequence. The temperature of high-temperature carbonization in each high-temperature carbonization zone is in a range of 1000 to 1800 °C, for example, may be 1000 °C, 1200 °C, 1400 °C, 1500 °C, 1700 °C, or 1800 °C. The duration of high-temperature carbonization process performed on the pre-oxidized fiber in each high-temperature carbonization zone is 2 to 3 minutes, for example, may be 2 minutes, 2.5 minutes, or 3 minutes.

In order to further illustrate the technical solutions of the present disclosure, the technical solutions of the present disclosure are described below through embodiments and comparative examples.

### Embodiment 1

The polyacrylonitrile precursor is provided. The strength of the polyacrylonitrile precursor is ≥ 7.0 cN/dtex, and the fineness of the polyacrylonitrile precursor is ≤ 0.75 dtex.

Pass the polyacrylonitrile precursor through 3 temperature zones in sequence to perform the pre-oxidation process treatment on the polyacrylonitrile precursor. The temperature of each temperature zone is in a range of 200 to 300 °C. The increasing magnitude of the aromatization index of the polyacrylonitrile precursor is 0.15 when the polyacrylonitrile precursor is passed through a temperature zone. At the same time, when the pre-oxidation process treatment is performed, a circulating air is applied to the polyacrylonitrile precursor at a wind speed of 5 m/s, and the circulating air is clean air with PM2.5 = 25 µg/m³. The total treatment time of the pre-oxidation process of the polyacrylonitrile precursor passing through the 3 temperature zones is 40 minutes. The polyacrylonitrile precursor is pre oxidized through the 3 temperature zones to form the pre-oxidized fiber.

Then, a carbonization process treatment is performed on the pre-oxidized fiber to obtain the carbon fiber. Specifically, the pre-oxidized fiber is passed through 5 low-temperature carbonization zones in sequence. The temperature of each low-temperature carbonization zone is in a range of 400 to 800 °C. The duration of low-temperature carbonization process performed on the pre-oxidized fiber in each low-temperature carbonization zone is 2 to 3 minutes. Then, the pre-oxidized fiber is passed through 5 high-temperature carbonization zones in sequence. The temperature of each high-temperature carbonization zone is in a range of 1000 to 1800 °C. The duration of high-temperature carbonization process performed on the pre-oxidized fiber in each high-temperature carbonization zone is 2 minutes.

In this embodiment, after the pre-oxidized fiber is formed, the aromatization index (OF-AI) and the density of the pre-oxidized fiber are measured; after the carbon fiber is formed, the tensile strength and coefficient of variation of the carbon fiber are measured. The measurement results are shown in Table 1.

**Table 1 Performance measurement table of the pre-oxidized fiber and the carbon fiber in Embodiment 1**

| Name | OF-AI | OF-ρ | CF-TS | CF-CV (TS) |
|---|---|---|---|---|
| value | 0.45 | 1.340 g/cm³ | 5.66 GPa | 3.5% |

Where, OF-AI represents the aromatization index of the pre-oxidized fiber, OF-p represents the density of the pre-oxidized fiber, CF-TS represents the tensile strength of the carbon fiber, and CF-CV(TS) represents the coefficient of variation of the carbon fiber.

In this embodiment, the aromatization index (OF-AI) of the pre-oxidized fiber is measured by the following method.

The pre-oxidized fiber is detected by an X-ray diffraction (XRD) instrument to obtain the diffraction image of the pre-oxidized fiber. Then, the aromatization index (OF-AI) of the pre-oxidized fiber is calculated according to the following calculation formula. $OF - AI \left(%\right) = IA / \left(IP+IA\right) * 100 %$

Where, IP is the diffraction peak intensity of the diffraction image of the pre-oxidized fiber at about 17°, and IA is the diffraction peak intensity of the diffraction image of the pre-oxidized fiber at about 25.5°.

### Embodiment 2

The polyacrylonitrile precursor is provided. The strength of the polyacrylonitrile precursor is ≥ 7.0 cN/dtex, and the fineness of the polyacrylonitrile precursor is ≤ 0.75 dtex.

Pass the polyacrylonitrile precursor through 3 temperature zones in sequence to perform the pre-oxidation process treatment on the polyacrylonitrile precursor. The temperature of each temperature zone is in a range of 200 to 300 °C. The increasing magnitude of the aromatization index of the polyacrylonitrile precursor is 0.17 when the polyacrylonitrile precursor is passed through a temperature zone. At the same time, when the pre-oxidation process treatment is performed, a circulating air is applied to the polyacrylonitrile precursor at a wind speed of 8 m/s, and the circulating air is clean air with PM2.5 = 15 µg/m³. The total treatment time of the pre-oxidation process of the polyacrylonitrile precursor passing through the 3 temperature zones is 30 minutes. The polyacrylonitrile precursor is pre oxidized through the 3 temperature zones to form the pre-oxidized fiber.

Then, a carbonization process treatment is performed on the pre-oxidized fiber to obtain the carbon fiber. The implementation of performing the carbonization process treatment on the pre-oxidized fiber in this embodiment is the same as that in Embodiment 1, and is not described again here.

In this embodiment, after the pre-oxidized fiber is formed, the aromatization index (OF-AI) and the density of the pre-oxidized fiber are measured; after the carbon fiber is formed, the tensile strength and coefficient of variation of the carbon fiber are measured. The measurement results are shown in Table 2.

**Table 2 Performance measurement table of the pre-oxidized fiber and the carbon fiber in Embodiment 2**

| Name | OF-AI | OF-ρ | CF-TS | CF-CV (TS) |
|---|---|---|---|---|
| value | 0.51 | 1.350 g/cm³ | 6.05 GPa | 1.5% |

Where, OF-AI represents the aromatization index of the pre-oxidized fiber, OF-p represents the density of the pre-oxidized fiber, CF-TS represents the tensile strength of the carbon fiber, and CF-CV(TS) represents the coefficient of variation of the carbon fiber.

### Embodiment 3

The polyacrylonitrile precursor is provided. The strength of the polyacrylonitrile precursor is ≥ 7.0 cN/dtex, and the fineness of the polyacrylonitrile precursor is ≤ 0.75 dtex.

Pass the polyacrylonitrile precursor through 2 temperature zones in sequence to perform the pre-oxidation process treatment on the polyacrylonitrile precursor. The temperature of each temperature zone is in a range of 200 to 300 °C. The increasing magnitude of the aromatization index of the polyacrylonitrile precursor is 0.25 when the polyacrylonitrile precursor is passed through a temperature zone. At the same time, when the pre-oxidation process treatment is performed, a circulating air is applied to the polyacrylonitrile precursor at a wind speed of 7 m/s, and the circulating air is clean air with PM2.5 = 50 µg/m³. The total treatment time of the pre-oxidation process of the polyacrylonitrile precursor passing through the 2 temperature zones is 35 minutes. The polyacrylonitrile precursor is pre oxidized through the 2 temperature zones to form the pre-oxidized fiber.

Then, a carbonization process treatment is performed on the pre-oxidized fiber to obtain the carbon fiber. The implementation of performing the carbonization process treatment on the pre-oxidized fiber in this embodiment is the same as that in Embodiment 1, and is not described again here.

In this embodiment, after the pre-oxidized fiber is formed, the aromatization index (OF-AI) and the density of the pre-oxidized fiber are measured; after the carbon fiber is formed, the tensile strength and coefficient of variation of the carbon fiber are measured. The measurement results are shown in Table 3.

**Table 3 Performance measurement table of the pre-oxidized fiber and the carbon fiber in Embodiment 3**

| Name | OF-AI | OF-ρ | CF-TS | CF-CV (TS) |
|---|---|---|---|---|
| value | 0.50 | 1.345 g/cm³ | 5.70 GPa | 3.2% |

Where, OF-AI represents the aromatization index of the pre-oxidized fiber, OF-p represents the density of the pre-oxidized fiber, CF-TS represents the tensile strength of the carbon fiber, and CF-CV(TS) represents the coefficient of variation of the carbon fiber.

### Embodiment 4

The polyacrylonitrile precursor is provided. The strength of the polyacrylonitrile precursor is ≥ 7.0 cN/dtex, and the fineness of the polyacrylonitrile precursor is ≤ 0.75 dtex.

Pass the polyacrylonitrile precursor through 2 temperature zones in sequence to perform the pre-oxidation process treatment on the polyacrylonitrile precursor. The temperature of each temperature zone is in a range of 200 to 300 °C. The increasing magnitude of the aromatization index of the polyacrylonitrile precursor is 0.30 when the polyacrylonitrile precursor is passed through a temperature zone. At the same time, when the pre-oxidation process treatment is performed, a circulating air is applied to the polyacrylonitrile precursor at a wind speed of 10 m/s, and the circulating air is clean air with PM2.5 = 100 µg/m³. The total treatment time of the pre-oxidation process of the polyacrylonitrile precursor passing through the 2 temperature zones is 30 minutes. The polyacrylonitrile precursor is pre oxidized through the 2 temperature zones to form the pre-oxidized fiber.

Then, a carbonization process treatment is performed on the pre-oxidized fiber to obtain the carbon fiber. The implementation of performing the carbonization process treatment on the pre-oxidized fiber in this embodiment is the same as that in Embodiment 1, and is not described again here.

In this embodiment, after the pre-oxidized fiber is formed, the aromatization index (OF-AI) and the density of the pre-oxidized fiber are measured; after the carbon fiber is formed, the tensile strength and coefficient of variation of the carbon fiber are measured. The measurement results are shown in Table 4.

**Table 4 Performance measurement table of the pre-oxidized fiber and the carbon fiber in Embodiment 4**

| Name | OF-AI | OF-ρ | CF-TS | CF-CV (TS) |
|---|---|---|---|---|
| value | 0.60 | 1.358 g/cm³ | 5.60 GPa | 3.9% |

Where, OF-AI represents the aromatization index of the pre-oxidized fiber, OF-p represents the density of the pre-oxidized fiber, CF-TS represents the tensile strength of the carbon fiber, and CF-CV(TS) represents the coefficient of variation of the carbon fiber.

### Comparative Embodiment 1

The polyacrylonitrile precursor is provided. The strength of the polyacrylonitrile precursor is ≥ 7.0 cN/dtex, and the fineness of the polyacrylonitrile precursor is ≤ 0.75 dtex.

Pass the polyacrylonitrile precursor through 3 temperature zones in sequence to perform the pre-oxidation process treatment on the polyacrylonitrile precursor. The temperature of each temperature zone is in a range of 200 to 300 °C. The aromatization index of the polyacrylonitrile precursor increases randomly from 0.1 to 0.4 to 0.55 when the polyacrylonitrile precursor is passed through each temperature zone of the 3 temperature zones. At the same time, when the pre-oxidation process treatment is performed, a circulating air is applied to the polyacrylonitrile precursor at a wind speed of 7 m/s, and the circulating air is clean air with PM2.5 = 50 µg/m³. The total treatment time of the pre-oxidation process of the polyacrylonitrile precursor passing through the 3 temperature zones is 40 minutes. The polyacrylonitrile precursor is pre oxidized through the 3 temperature zones to form the pre-oxidized fiber.

Then, a carbonization process treatment is performed on the pre-oxidized fiber to obtain the carbon fiber. Specifically, the pre-oxidized fiber is passed through 5 low-temperature carbonization zones in sequence. The temperature of each low-temperature carbonization zone is in a range of 400 to 800 °C. The duration of low-temperature carbonization process performed on the pre-oxidized fiber in each low-temperature carbonization zone is 2 to 3 minutes. Then, the pre-oxidized fiber is passed through 5 high-temperature carbonization zones in sequence. The temperature of each high-temperature carbonization zone is in a range of 1000 to 1800 °C. The duration of high-temperature carbonization process performed on the pre-oxidized fiber in each high-temperature carbonization zone is 2 minutes.

In this embodiment, after the pre-oxidized fiber is formed, the aromatization index (OF-AI) and the density of the pre-oxidized fiber are measured; after the carbon fiber is formed, the tensile strength and coefficient of variation of the carbon fiber are measured. The measurement results are shown in Table 5.

**Table 5 Performance measurement table of the pre-oxidized fiber and the carbon fiber in Comparative Embodiment 1**

| Name | OF-AI | OF-ρ | CF-TS | CF-CV (TS) |
|---|---|---|---|---|
| value | 0.55 | 1.354 g/cm³ | 5.22 GPa | 7.1% |

Where, OF-AI represents the aromatization index of the pre-oxidized fiber, OF-p represents the density of the pre-oxidized fiber, CF-TS represents the tensile strength of the carbon fiber, and CF-CV(TS) represents the coefficient of variation of the carbon fiber.

### Comparative Embodiment 2

The polyacrylonitrile precursor is provided. The strength of the polyacrylonitrile precursor is ≥ 7.0 cN/dtex, and the fineness of the polyacrylonitrile precursor is ≤ 0.75 dtex.

Pass the polyacrylonitrile precursor through 3 temperature zones in sequence to perform the pre-oxidation process treatment on the polyacrylonitrile precursor. The temperature of each temperature zone is in a range of 200 to 300 °C. The increasing magnitude of the aromatization index of the polyacrylonitrile precursor is 0.18 when the polyacrylonitrile precursor is passed through a temperature zone. At the same time, when the pre-oxidation process treatment is performed, a circulating air is applied to the polyacrylonitrile precursor at a wind speed of 8 m/s, and the circulating air is clean air with PM2.5 = 150 µg/m³. The total treatment time of the pre-oxidation process of the polyacrylonitrile precursor passing through the 3 temperature zones is 40 minutes. The polyacrylonitrile precursor is pre oxidized through the 3 temperature zones to form the pre-oxidized fiber.

Then, a carbonization process treatment is performed on the pre-oxidized fiber to obtain the carbon fiber. The implementation of performing the carbonization process treatment on the pre-oxidized fiber in this embodiment is the same as that in Comparative Embodiment 1, and is not described again here.

In this embodiment, after the pre-oxidized fiber is formed, the aromatization index (OF-AI) and the density of the pre-oxidized fiber are measured; after the carbon fiber is formed, the tensile strength and coefficient of variation of the carbon fiber are measured. The measurement results are shown in Table 6.

**Table 6 Performance measurement table of the pre-oxidized fiber and the carbon fiber in Comparative Embodiment 2**

| Name | OF-AI | OF-ρ | CF-TS | CF-CV (TS) |
|---|---|---|---|---|
| value | 0.54 | 1.350 g/cm³ | 5.48 GPa | 6.6% |

Where, OF-AI represents the aromatization index of the pre-oxidized fiber, OF-p represents the density of the pre-oxidized fiber, CF-TS represents the tensile strength of the carbon fiber, and CF-CV(TS) represents the coefficient of variation of the carbon fiber.

By comparing Embodiments 1 to 4, Comparative Embodiment 1 and Comparative Embodiment 2, and referring to Tables 1 to 6, it can be seen that in this embodiment, the process conditions of the pre-oxidation process treatment are controlled so that the aromatization index of the polyacrylonitrile precursor increases with an equal magnitude when the polyacrylonitrile precursor is passed through each temperature zone. The tensile strength of the prepared carbon fiber is ≥5.6 Gpa. The coefficient of variation of the tensile strength is ≤ 3.9%, and the performance of the carbon fiber is more excellent.

Various embodiments or implementations in this specification have been described progressively, and each embodiment focuses on the differences from other embodiments, so the same and similar parts of the embodiments may refer to each other.

In the description of this specification, the description with reference to terms "an embodiment", "an exemplary embodiment", "some embodiments", "an illustrative implementation" or "an example" means that specific features, structures, materials or characteristics described with reference to an implementation or example are included in at least one implementation or example of the present disclosure.

Finally, it is to be noted that the foregoing embodiments are only used for describing the technical solutions of the present disclosure, rather than limiting the present disclosure. Although the present disclosure has been described in detail by the foregoing embodiments, a person of ordinary skill in the art should understood that modifications can still be made to the technical solutions recorded in the foregoing embodiments or equipment replacements can be made to some or all of the technical features, and these modifications or replacements do not make the essence of the corresponding technical solutions depart from the scope of the technical solutions in the embodiments of the present disclosure.

## Claims

1. A method for preparing high-performance and low-cost carbon fiber, **characterized by** comprising:
performing a pre-oxidation process treatment on polyacrylonitrile precursor using 2 to 3 temperature zones to obtain pre-oxidized fiber, wherein a temperature of the pre-oxidation process treatment is in a range of 200 to 300 °C, a difference between aromatization indexes of fibers in any two adjacent temperature zones is equal and in a range of 0.15 to 0.30, measured as described in description, a circulating air is applied during the pre-oxidation process treatment at a wind speed of 5 to 10 m/s and using clean air with PM2.5 ≤ 100 µg/m³, a duration of the pre-oxidation process treatment is less than or equal to 40 minutes; and
performing a carbonization process treatment on the pre-oxidized fiber to obtain the high-performance and low-cost carbon fiber.

2. The method for preparing high-performance and low-cost carbon fiber according to claim 1, wherein an aromatization index of the pre-oxidized fiber is less than or equal to 0.6.

3. The method for preparing high-performance and low-cost carbon fiber according to claim 1, wherein the polyacrylonitrile precursor is prepared by dry spinning, wet spinning, dry-jet wet spinning or electrostatic spinning.

4. The method for preparing high-performance and low-cost carbon fiber according to claim 1, wherein the strength of the polyacrylonitrile precursor is ≥ 7.0 cN/dtex, and the fineness of the polyacrylonitrile precursor is ≤ 0.75 dtex.

5. The method for preparing high-performance and low-cost carbon fiber according to claim 1, wherein during the pre-oxidation process treatment, a residence time of the polyacrylonitrile precursor in each temperature zone is the same.

6. The method for preparing high-performance and low-cost carbon fiber according to claim 1, wherein the difference between aromatization indexes of fibers in any two adjacent temperature zones is in a range of 0.17 to 0.25, measured as described in description.

7. The method for preparing high-performance and low-cost carbon fiber according to claim 1, wherein the wind speed is in a range of 7 to 8 m/s.

8. The method for preparing high-performance and low-cost carbon fiber according to claim 1, wherein the circulating air is applied using clean air with PM2.5 ≤ 50 µg/m³.

9. The method for preparing high-performance and low-cost carbon fiber according to claim 1, wherein the duration of the pre-oxidation process treatment is 30 to 40 minutes.

## Patentansprüche

1. Verfahren zum Herstellen von leistungsstarker und kostengünstiger Kohlefaser, **dadurch gekennzeichnet, dass** es Folgendes umfasst:
Durchführen einer Voroxidationsprozessbehandlung an einem Polyacrylnitril-Vorläufer unter Verwendung von 2 bis 3 Temperaturzonen, um eine voroxidierte Faser zu erhalten, wobei eine Temperatur der Voroxidationsprozessbehandlung in einem Bereich von 200 bis 300 °C liegt, eine Differenz zwischen Aromatisierungsindizes von Fasern in beliebigen zwei benachbarten Temperaturzonen gleich ist und in einem Bereich von 0,15 bis 0,30 liegt, wie in der Beschreibung beschrieben gemessen, eine zirkulierende Luft während der Voroxidationsprozessbehandlung bei einer Windgeschwindigkeit von 5 bis 10 m/s und unter Verwendung von sauberer Luft mit PM2,5 ≤ 100 µg/m³ eingesetzt wird, eine Dauer der Voroxidationsprozessbehandlung weniger als oder gleich 40 Minuten beträgt; und
Durchführen einer Karbonisierungsprozessbehandlung an der voroxidierten Faser, um die leistungsstarke und kostengünstige Kohlefaser zu erhalten.

2. Verfahren zum Herstellen von leistungsstarker und kostengünstiger Kohlefaser nach Anspruch 1, wobei ein Aromatisierungsindex der voroxidierten Faser kleiner oder gleich 0,6 ist.

3. Verfahren zum Herstellen von leistungsstarker und kostengünstiger Kohlefaser nach Anspruch 1, wobei der Polyacrylnitril-Vorläufer durch Trockenspinnen, Nassspinnen, Trockenstrahl-Nassspinnen oder elektrostatisches Spinnen hergestellt wird.

4. Verfahren zum Herstellen von leistungsstarker und kostengünstiger Kohlefaser nach Anspruch 1, wobei die Festigkeit des Polyacrylnitril-Vorläufers ≥ 7,0 cN/dtex beträgt und die Feinheit des Polyacrylnitril-Vorläufers ≤ 0,75 dtex beträgt.

5. Verfahren zum Herstellen von leistungsstarker und kostengünstiger Kohlefaser nach Anspruch 1, wobei während der Voroxidationsprozessbehandlung eine Verweilzeit des Polyacrylnitril-Vorläufers in jeder Temperaturzone gleich ist.

6. Verfahren zum Herstellen von leistungsstarker und kostengünstiger Kohlefaser nach Anspruch 1, wobei die Differenz zwischen Aromatisierungsindizes von Fasern in beliebigen zwei benachbarten Temperaturzonen in einem Bereich von 0,17 bis 0,25 liegt, wie in der Beschreibung beschrieben gemessen.

7. Verfahren zum Herstellen von leistungsstarker und kostengünstiger Kohlefaser nach Anspruch 1, wobei die Windgeschwindigkeit in einem Bereich von 7 bis 8 m/s liegt.

8. Verfahren zum Herstellen von leistungsstarker und kostengünstiger Kohlefaser nach Anspruch 1, wobei die zirkulierende Luft unter Verwendung von sauberer Luft mit PM2,5 ≤ 50 µg/m³ eingesetzt wird.

9. Verfahren zum Herstellen von leistungsstarker und kostengünstiger Kohlefaser nach Anspruch 1, wobei die Dauer der Voroxidationsprozessbehandlung 30 bis 40 Minuten beträgt.

## Revendications

1. Procédé de préparation de fibre de carbone à haute performance et à faible coût, **caractérisé en ce qu'**il comprend :
la réalisation d'un traitement par processus de pré-oxydation sur un précurseur de polyacrylonitrile en utilisant 2 à 3 zones de température pour obtenir une fibre pré-oxydée, la température du traitement par processus de pré-oxydation étant comprise dans une plage de 200 à 300°C, la différence entre les indices d'aromatisation des fibres dans deux zones de température adjacentes quelconques étant égale et comprise dans une plage de 0,15 à 0,30, mesurée comme décrit dans la description,
un air circulant est appliqué pendant le traitement par processus de pré-oxydation à une vitesse de vent de 5 à 10 m/s et en utilisant de l'air propre avec PM2,5 ≤ 100 µg/m³, la durée du traitement par processus de pré-oxydation étant inférieure ou égale à 40 minutes ; et
la réalisation d'un traitement par processus de carbonisation sur la fibre pré-oxydée pour obtenir la fibre de carbone à haute performance et à faible coût.

2. Procédé de préparation de fibre de carbone à haute performance et à faible coût selon la revendication 1, l'indice d'aromatisation de la fibre pré-oxydée étant inférieur ou égal à 0,6.

3. Procédé de préparation de fibre de carbone à haute performance et à faible coût selon la revendication 1, ledit précurseur de polyacrylonitrile étant préparé par filage à sec, filage humide, filage humide à jet sec ou filage électrostatique.

4. Procédé de préparation de fibre de carbone à haute performance et à faible coût selon la revendication 1, ladite résistance du précurseur de polyacrylonitrile étant ≥ 7,0 cN/dtex, et ladite finesse du précurseur de polyacrylonitrile étant ≤ 0,75 dtex.

5. Procédé de préparation de fibre de carbone à haute performance et à faible coût selon la revendication 1, le temps de séjour du précurseur de polyacrylonitrile dans chaque zone de température étant le même pendant le traitement par processus de pré-oxydation.

6. Procédé de préparation de fibre de carbone à haute performance et à faible coût selon la revendication 1, ladite différence entre les indices d'aromatisation des fibres dans deux zones de température adjacentes quelconques étant comprise dans une plage de 0,17 à 0,25, mesurée comme décrit dans la description.

7. Procédé de préparation de fibre de carbone à haute performance et à faible coût selon la revendication 1, ladite vitesse du vent se situant dans une plage de 7 à 8 m/s.

8. Procédé de préparation de fibre de carbone à haute performance et à faible coût selon la revendication 1, ledit air circulant étant appliqué en utilisant de l'air propre avec PM2,5 ≤ 50 µg/m³.

9. Procédé de préparation de fibre de carbone à haute performance et à faible coût selon la revendication 1, ladite durée du traitement par processus de pré-oxydation étant de 30 à 40 minutes.
